# EUROPÄISCHE PATENTSCHRIFT

(11) **EP 1 578 836 B1**
(45) Veröffentlichungstag und Bekanntmachung des Hinweises auf die Patenterteilung: **27.02.2008**
(21) Anmeldenummer: 03785759.6
(22) Anmeldetag: 06.12.2003
(51) Int. Cl.: C08G 18/80, C08G 18/10

(54) **MIT CH-ACIDEN CYCLISCHEN KETONEN BLOCKIERTE POLYURETHAN PREPOLYMERE, DARAUS HERGESTELLTE REAKTIVSYSTEME, DEREN HERSTELLUNG UND VERWENDUNG**
POLYURETHANE PREPOLYMERS BLOCKED WITH CH-ACIDIC CYCLIC KETONES, REACTIVE SYSTEMS PRODUCED FROM SAID POLYMERS AND THE USE OF THE SAME
PREPOLYMERES DE POLYURETHANNE BLOQUES PAR DES CETONES CYCLIQUES A CH-ACIDE, SYSTEMES REACTIFS PRODUITS AU MOYEN DE CES PREPOLYMERES, ET PRODUCTION ET UTILISATION DE CEUX-CI

(30) Priorität: 20.12.2002 DE 10260299
(43) Veröffentlichungstag der Anmeldung: 28.09.2005
(73) Patentinhaber: Bayer MaterialScience AG, 51368 Leverkusen (DE)
(72) Erfinder: KARLOU-DETIG, Kamelia, 82049 Pullach (DE); SIMON, Joachim, 41515 Grevenbroich (DE); MAGER, Michael, 51375 Leverkusen (DE); STINGL, Thomas, 56410 Montabaur (DE); GÜRTLER, Christoph, 50676 Köln (DE); SCHELHAAS, Michael, 50733 Köln (DE)
(86) Internationale Anmeldenummer: PCT/EP2003/013833
(87) Internationale Veröffentlichungsnummer: WO 2004/058849

(56) Entgegenhaltungen:
- EP-A- 0 947 531
- WO-A-01/16202
- WO-A-03/004545

## Beschreibung

Die Erfindung betrifft neue blockierte Polyurethan-Prepolymere, ein Verfahren zu deren Herstellung und daraus hergestellte raumtemperaturhärtende Reaktivsysteme und deren Verwendung.

Die aus dem Stand der Technik bekannten Polyamin-/Epoxidharz-Systeme zeichnen sich beispielsweise durch exzellente Metallhaftung, sehr gute Chemikalienbeständigkeit und hervorragende Korrosionsschutzeigenschaften aus. Bei lösemittelhaltigen Formulierungen und Pulverlacksystemen können durch den Einsatz von Epoxidharzen mit hohen Molmassen und/oder Polyaminoamiden, z.B. auf der Basis von Dimerfettsäuren als Härter, vernetzte Filme mit hoher Flexibilität erhalten werden. Beschichtungen auf der Basis von lösemittelfreien Flüssigharzen und lösemittelfreien, aminischen Härtern sind aufgrund der niedrigen Molmassen der Epoxidharze und der daraus resultierenden hohen Netzwerkdichte sehr spröde. Daher werden in lösemittelfreien Formulierungen z.B. Teerersatzstoffe wie Cumaronharze zur Plastifizierung eingesetzt. Insbesondere bei Verwendung größerer Mengen an Kohlenwasserstoffharzen neigen derartige Beschichtungen, infolge Migration der nichtfunktionellen Bestandteile, zur Langzeitversprödung.

Eine gute und dauerhafte Elastifizierung der Epoxidharze lässt sich durch Kombination mit Polyurethanen erreichen. So wurden z.B. in der DE-A 23 38 256 hochmolekulare, aminterminierte Polyetherurethanharnstoffe durch Reaktion von freien Isocyanatgruppen enthaltenden Prepolymeren mit Aminen in stark verdünnten Lösungen hergestellt und anschließend mit Epoxidharzen ausgehärtet. Der Einsatz der hierzu erforderlichen, insbesondere aromatischen Lösungsmittel, ist in der Praxis sowohl vom technischen als auch physiologischen Standpunkt aus nachteilig. Andererseits ist die Viskosität der lösemittelfreien Reaktionsprodukte, wie sie gemäß der DE-A 23 38 256 gezielt hergestellt wurden, für die Anwendungen in der Praxis zu hoch.

In der DE-A 24 18 041 wird ein Verfahren zur Herstellung von elastifizierten Formteilen und Flächengebilden beschrieben, in welchem Epoxid- mit Aminverbindungen umgesetzt werden, die durch Hydrolyse prepolymerer Ketimine bzw. Enamine erhalten werden. Mit diesem Verfahren sind chemikalienfeste, gut haftende Duromere mit verbesserten Eigenschaften herstellbar. Nachteilig an dem beschriebenen Verfahren ist der hohe verfahrenstechnische Aufwand.

Die DE-A 21 52 606 beschreibt Reaktivsysteme auf Basis Alkylphenol-blockierter Polyisocyanate und Polyamine, die gegebenenfalls auch in Kombination mit Epoxidharzen ausgehärtet werden können. Auch diese Reaktivsysteme sind mit einigen anwendungstechnischen Nachteilen behaftet, z.B. haben die Reaktivsysteme eine relativ hohe Viskosität und das freiwerdende Blockierungsmittel ist von vergleichsweise niedrigem Molekulargewicht, was dazu führt, dass es mit der Zeit aus der Beschichtung auswandert und die Haftung der Beschichtung zum Substrat nicht mehr ausreichend ist.

Um eine gezielte Reaktion von Polyisocyanat-Prepolymeren mit überschüssigen Mengen Diamin zu ermöglichen, wurde daher vielfach vorgeschlagen, die Polyisocyanate in blockierter Form einzusetzen, so z.B. beschrieben in CA-A 219986, EP- A 293 110 oder EP-A 082 983. Dort werden als bevorzugte Blockierungsmittel Phenole oder substituierte Phenole eingesetzt. Nach erfolgter Reaktion mit den Polyaminen können diese Substanzen aufgrund ihres hohen Siedepunktes nicht oder nur unvollständig destillativ aus dem Reaktionsgemisch entfernt werden. Das Verbleiben der gegebenenfalls substituierten Phenole in der Abmischungen oder in der Kunststoffmasse führt aber zu den bereits beschriebenen Nachteilen.

In der EP-A 0 457 089 werden dagegen sekundäre Amine mit vorzugsweise niedrigem Siedepunkt als Blockierungsmittel eingesetzt. Verbleiben diese Amine nach der Deblockierung in der Reaktionsmischung, kommt es leicht zu einer Geruchsbelästigung. Nach dem Einsatz in Epoxid-Systemen kann das sekundäre Amin zwar prinzipiell in das System eingebaut werden, diese Reaktion verläuft jedoch gerade bei tiefen Temperaturen (z.B. Raumtemperatur) relativ langsam, wodurch ein Teil der Amine die Beschichtung verlassen wird. In einer besonders bevorzugten Anwendung wird das aminische Blockierungsmittel nach der Deblockierung aus dem Reaktionsgemisch abdestilliert. Diese Verfahrensweise führt zwar zu Produkten ohne Geruchsbelästigung, ist aber sehr aufwendig und somit teuer.

Aus der US-A 6,060,574 sind darüber hinaus reaktive Zusammensetzungen bekannt, welche aus reversibel blockierten organischen Polyisocyanaten und mindestens einem Polyamin mit mindestens zwei primären Aminogruppen bestehen und gegebenenfalls zusätzlich noch eine Oxirangruppen-haltige Verbindung enthalten. Als Blockierungsmittel für die organischen Polyisocyanate werden Kohlenwasserstoff-Harze mit phenolischen OH-Gruppen eingesetzt. Derart blockierte Polyisocyanate zeichnen sich durch eine deutlich reduzierte Reaktivität gegenüber Polyaminen aus, verglichen mit Alkylphenol-blockierten Polyisocyanaten. Als organische Polyisocyanate können Prepolymere eingesetzt werden, die durch Umsetzung von Polyhydroxy-Verbindungen mit einem Überschuß von Di- oder Polyisocyanaten erhalten werden. Als Polyhydroxy-Verbindungen können z.B. Polyetherpolyole eingesetzt werden, die durch Alkoxylierung geeigneter Starter-Moleküle (z.B. monomere Polyole) zugänglich sind.

Alle nach dem Stand der Technik beschriebenen, reversibel blockierten Polyurethan-Prepolymere, hergestellt durch Umsetzung eines Isocyanatgruppen-haltigen Polyurethan-Prepolymers mit einem Blockierungsmittel, weisen jedoch den Nachteil auf, dass nach der Umsetzung mit einem Polyamin das Blockierungsmittel wieder freigesetzt wird. Das Blockierungsmittel ist im entstehenden Kunststoff chemisch nicht gebunden und kann so mit der Zeit entweichen bzw. ausgewaschen werden, was für die mechanischen Eigenschaften des Kunststoffs von großem Nachteil ist.

Darüber hinaus weisen die bislang bekannten, reversibel blockierte Polyurethan-Prepolymere durch intermolekulare Wasserstoffbrückenbildung der Urethangruppen eine hohe Viskosität auf, was für die Verarbeitung entsprechender Reaktivsysteme mit Polyaminen und gegebenenfalls Epoxiden von großem Nachteil ist. Eine Sprühapplikation ist aufgrund der hohen Viskosität solcher Systeme meist nicht möglich.

Aufgabe der vorliegenden Erfindung war daher die Bereitstellung von neuen Polyurethan-Prepolymeren, die eine deutlich niedrigere Viskosität als die bisher bekannten, reversibel blockierten Polyurethan-Prepolymere aufweisen, und die zusammen mit Polyaminen und gegebenenfalls Oxirangruppen aufweisenden Verbindungen in raumtemperaturhärtenden Reaktivsystemen eingesetzt werden können, wobei das Blockierungsmittel bei der Aushärtung des Reaktivsystems nicht freigesetzt wird (Abspalter-freie Systeme).

Es wurde nun gefunden, dass Polyurethan-Prepolymere, die mit bestimmten aktivierten cyclischen Ketonen blockiert sind, eine erheblich niedrigere Viskosität als entsprechend dem Stand der Technik blockierte Prepolymere aufweisen, und nach der Reaktion mit Polyaminen keine Abspaltung des Blockierungsmittels erfolgt (Abspalter-freie Systeme).

Gegenstand der Erfindung sind daher Polyurethan-Prepolymere, die
I) Alkylenoxid-Ether-Einheiten und
II) Struktureinheiten der Formel (1) 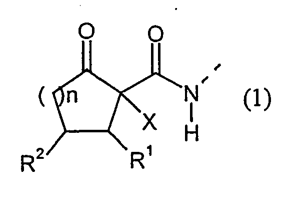
aufweisen, in welcher
- X: eine elektronenziehende Gruppe ist,
- R¹, R²: unabhängig voneinander ein Wasserstoffatom, ein gesättigter oder ungesättigter aliphatischer oder cycloaliphatischer, ein gegebenenfalls substituierter aromatischer oder araliphatischer Rest sein können und je bis zu 12 Kohlenstoffatome und gegebenenfalls bis zu 3 Heteroatome der Elemente Sauerstoff, Schwefel, Stickstoff enthalten und gegebenenfalls durch Halogenatome substituiert sein können und
- n: eine ganze Zahl von 0 bis 5 ist.

Unter Alkylenoxid-Ether-Einheiten der erfindungsgemäßen Polyurethan-Prepolymere werden Strukturen der Formel (2) 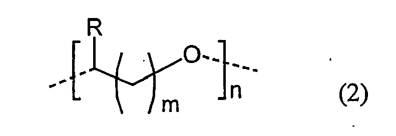 verstanden, wobei
- R:: Wasserstoff oder ein C1- bis C10-Alkylrest und
- n:: 1 bis 1000, und
- m:: 1 bis 3 sein kann.

Bevorzugt ist R = Wasserstoff oder eine Methylgruppe und n gleich 1 bis 300.

Des weiteren ist ein Gegenstand der Erfindung ein Verfahren zur Herstellung der erfindungsgemäßen Polyurethan-Prepolymere, bei dem
A) ein oder mehrere Polyisocyanate mit
B) einem oder mehreren Polyetherpolyolen
C) gegebenenfalls in Anwesenheit eines oder mehrerer Katalysatoren umgesetzt wird und anschließend die freien NCO-Gruppen mit
D) einem Blockierungsmittel enthaltend mindestens ein CH-azides cyclisches Keton der allgemeinen Formel (3), 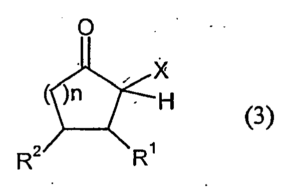 in welcher
   - X: eine elektronenziehende Gruppe ist,
   - R¹, R²: unabhängig voneinander ein Wasserstoffatom, ein gesättigter oder ungesättigter aliphatischer oder cycloaliphatischer, ein gegebenenfalls substituierter aromatischer oder araliphatischer Rest sein können und je bis zu 12 Kohlenstoffatome und gegebenenfalls bis zu 3 Heteroatome der Elemente Sauerstoff, Schwefel, Stickstoff enthalten und gegebenenfalls durch Halogenatome substituiert sein können und
   - n: eine ganze Zahl von 0 bis 5 ist,
E) gegebenenfalls in Anwesenheit eines oder mehrerer Katalysatoren
umgesetzt werden.

Geeignete Polyisocyanate als Komponente A) sind alle bekannten aliphatischen, cycloaliphatischen, aromatischen oder heterocyclischen organischen Isocyanate, bevorzugt Di- oder Polyisocyanate mit mindestens zwei Isocyanatgruppen sowie Gemische genannter Verbindungen. Beispiele für geeignete aliphatische Isocyanate sind Di- oder Triisocyanate wie z.B. 1,4-Butandiisocyanat, 1,5-Pentandiisocyanat, 1,6-Hexandiisocyanat (Hexamethylendiisocyanat, HDI), 4-Isocyanatomethyl-1,8-octandiisocyanat (Triisocyanatononan, TIN) oder cyclische Systeme, wie z.B. 4,4'-Methylenbis(cyclohexylisocyanat) (Desmodur^{®} W, Bayer AG, Leverkusen), 3,5,5-Trimethyl-1-isocyanato-3-isocyanatomethyl-cyclohexan (Isophorondiisocyanat, IPDI) sowie ω,ω'-Diisocyanato-1,3-dimethylcyclohexan (H₆XDI). Besonders geeignet sind aromatische Polyisocyanate wie z.B. 1,5-Naphthalendiisocyanat, Diisocyanatodiphenylmethan (2,2'-, 2,4- und 4,4'-Methylendiphenyldiisocyanat, MDI), insbesondere das 4,4'-Isomere und technische Gemische der 2,4- und 4,4'-Isomere, Diisocyanatomethylbenzol (2,4- und 2,6 Toluylendiisocyanat, TDI), insbesondere das 2,4 und das 2,6-Isomere und technische Gemische der beiden Isomeren sowie 1,3-Bis(isocyanatomethyl)benzol (XDI).

Ein ganz besonders geeignetes aromatisches Diisocyanat ist 2,4-Toluylendiisocyanat sowie dessen technisches Gemisch aus 70 bis 90 % 2,4-Toluylendiisocyanat und 30 bis 10 % 2,6-Toluylendiisocyanat.

Ebenfalls geeignet im Sinne der Erfindung sind die an sich bekannten Folgeprodukte der genannten Isocyanate mit Biuret-, Isocyanurat-, Iminooxadiazindion-, Uretdion-, Allophanat und/oder Urethanstruktur.

Als Komponente B) des erfindungsgemäßen Verfahrens zur Herstellung der erfindungsgemäßen Polyurethan-Prepolymere, werden aus-der Polyurethanchemie an sich bekannte, höhermolekulare Polyetherpolyole eingesetzt, die in an sich bekannter Weise durch Alkoxylierung von geeigneten Starter-Molekülen zugänglich sind.

Bevorzugt werden Polyetherpolyole eines Molekulargewichtsbereichs von 300 bis 20000, bevorzugt 1000 bis 12000, besonders bevorzugt 2000 bis 6000, eingesetzt.

Geeignete Starter-Moleküle sind beispielsweise einfache Polyole wie Ethylenglykol, 1,2- bzw. 1,3-Propylenglykol und 1,4-Butandiol, 1,6-Hexandiol, Neopentylglykol, 2-Ethylhexandiol-1,3, Glyzerin, Trimethylolpropan, Pentaerythrit, Sorbit sowie niedermolekulare, Hydroxylgruppen aufweisende Ester derartiger Polyole mit aliphatischen oder aromatischen Dicarbonsäuren. Weitere Beispiele sind niedermolekulare Ethoxylierungs- oder Propoxylierungsprodukte derartiger einfacher Polyole oder beliebige Gemische derartiger modifizierter oder nicht modifizierter Alkohole, Wasser, organische Polyamine mit mindestens zwei N-H-Bindungen oder beliebige Gemische derartiger Starter-Moleküle.

Für die Alkoxylierung geeignet sind cyclische Ether wie Tetrahydrofuran und/oder Alkylenoxide wie Ethylenoxid, Propylenoxid, Butylenoxide, Styroloxid oder Epichlorhydrin, insbesondere Ethylenoxid und/oder Propylenoxid, die in beliebiger Reihenfolge oder auch im Gemisch bei der Alkoxylierung eingesetzt werden können.

Ganz besonders bevorzugt sind Polyetherpolyole des Molekulargewichtsbereichs 300 bis 20 000, bevorzugt 1000 bis 12000, besonders bevorzugt 2000 bis 6000, mit einem Gehalt an ungesättigten Endgruppen von kleiner oder gleich 0,02 Milliäquivalente pro Gramm Polyol, bevorzugt kleiner oder gleich 0,015 Milliäquivalente pro Gramm Polyol, besonders bevorzugt kleiner oder gleich 0,01 Milliäquivalente pro Gramm Polyol (Bestimmungsmethode ASTM D2849-69). Die Polyetherpolyole haben eine besonders enge Molekulargewichtsverteilung, d.h. eine Polydispersität (PD = M_{w}/Mₙ) von 1,1 bis 1,5 und/oder eine OH-Funktionalität ≥ 1,90. Bevorzugt weisen die genannten Polyetherpolyole eine Polydispersität von 1,1 bis 1,5 und eine OH-Funktionalität ≥ 1,9 auf, besonders bevorzugt ≥ 1,95 auf.

Die Polyetherpolyole mit einem Gehalt an ungesättigten Endgruppen von kleiner oder gleich 0,02 Milliäquivalente und besonders enger Molekulargewichtsverteilung, d.h. einer Polydispersität von 1,1 bis 1,5 und/oder einer OH-Funktionalität ≥ 1,90 sind in an sich bekannter Weise durch Alkoxylierung von geeigneten Starter-Molekülen, insbesondere unter Verwendung von Doppelmetallcyanid-Katalysatoren (DMC-Katalyse) herstellbar. Dies ist z.B. in der US-A 5158 922 (z.B. Beispiel 30) und EP-A 0 654 302 302 (S. 5, Z. 26 bis S. 6, Z. 32) beschrieben.

Beispiele dieser ganz besonders bevorzugten Polyetherpolyole sind in Tabelle 1 genannt:

**Tabelle 1**

| | Acclaim® 1000 | Acclaim® 2200 | Acclaim® 3201 | Acclaim® 4200 | Acclaim® 6300 | Acclaim® 8200 |
|---|---|---|---|---|---|---|
| **Physikalische Daten** | | | | | | |
| Molekulargewicht | 1000 | 2000 | 3000 | 4000 | 6000 | 8000 |
| Funktionalität | 2 | 2 | 2 | 2 | 3 | 2 |
| Viskosität (25°C) | 70 | 335 | 620 | 980 | 1470 | 3000 |

| **Chemische Daten** | | | | | | |
|---|---|---|---|---|---|---|
| OH-Zahl | 112 | 56 | 37 | 28 | 28 | 14 |
| (mg KOH/g) | | | | | | |
| Doppelbindungsanteil | ≤ 0,0070 | ≤ 0,0070 | ≤ 0,0070 | ≤ 0,0070 | ≤ 0,0070 | ≤ 0,0070 |
| (meq/g) | | | | | | |
| Säurezahl | 0,02 | 0,02 | 0,018 | 0,018 | 0,02 | 0,02 |
| (mg KOH/g) | | | | | | |

Alle Acclaim^{®}-Produkte sind bei der Fa. Bayer AG, Leverkusen, DE erhältlich.

Als Verbindungen der Komponente C) können die aus der Polyurethanchemie an sich bekannten Katalysatoren zur Beschleunigung der NCO/OH-Reaktion, insbesondere metallorganische Verbindungen wie Zinn(II)octoat, Dibutylzinn(II)diacetat, Dibutylzinn(II)dilaurat oder tertiäre Amine wie Triethylamin oder Diazabicyclooctan eingesetzt werden.

In Komponente D) werden als Blockierungsmittel CH-azide cyclische Ketone der allgemeinen Formel (3) eingesetzt, 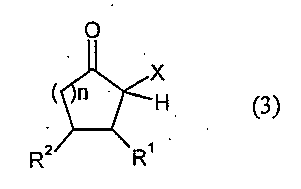 in welcher
- X: eine elektronenziehende Gruppe ist,
- R¹, R²: unabhängig voneinander ein Wasserstoffatom, ein gesättigter oder ungesättigter aliphatischer oder cycloaliphatischer, ein gegebenenfalls substituierter aromatischer oder araliphatischer Rest sein können und je bis zu 12 Kohlenstoffatome und gegebenenfalls bis zu 3 Heteroatome der Elemente Sauerstoff, Schwefel, Stickstoff enthalten und gegebenenfalls durch Halogenatome substituiert sein können und
- n: eine ganze Zahl von 0 bis 5 ist.

Bei der elektronenziehenden Gruppe X kann es sich um alle Substituenten handeln, die zu einer CH-Azidität des α-ständigen Wasserstoffes führen. Dies können beispielsweise Estergruppen, Sulfoxidgruppen, Sulfongruppen, Nitrogruppen, Phosphonatgruppen, Nitrilgruppen, Isonitrilgruppen oder Carbonylgruppen sein. Bevorzugt sind Nitril-und Estergruppen, besonders bevorzugt der Carbonsäuremethylester- und Carbonsäureethylestergruppen.

Geeignet sind auch Verbindungen der allgemeinen Formel (3), deren Ring gegebenenfalls Heteroatome, wie Sauerstoff-, Schwefel- oder Stickstoffatome enthalten. Bevorzugt ist hierbei das Strukturmotiv eines Lactons. Bevorzugt weist das aktivierte cyclische System der Formel (3) eine Ringgröße von 5 (n = 1) und 6 (n = 2) auf.

Bevorzugte Verbindungen der allgemeinen Formel (3) sind Cyclopentanon-2-carboxymethylester und -carboxyethylester, Cyclopentanon-2-carbonsäurenitril, Cyclohexanon-2-carboxymethylester und -carboxyethylester oder Cyclopentanon-2-carbonylmethan. Besonders bevorzugt sind Cyclopentanon-2-carboxymethylester und -carboxyethylester sowie Cyclohexanon-2-carboxymethylester und -carboxyethylester.

Selbstverständlich können in Komponente D) die genannten CH-aziden cyclischen Ketone sowohl in Mischungen untereinander als auch in beliebigen Mischungen mit anderen Blockierungsmitteln eingesetzt werden. Geeignete weitere Blockierungsmittel sind beispielsweise Alkohole, Lactame, Oxime, Malonester, Alkylacetoacetate, Triazole, Phenole, Imidazole, Pyrazole sowie Amine, wie z.B. Butanonoxim, Diisopropylamin, 1,2,4-Triazol, Dimethyl-1,2,4-triazol, Imidazol, Malonsäurediethylester, Acetessigester, Acetonoxim, 3,5-Dimethylpyrazol, ε-Caprolactam, N-Methyl-, N-Ethyl-, N-(Iso)propyl-, N-n-Butyl-, N-iso-Butyl-, N-tert.-Butyl-benzylamin oder 1,1-Dimethylbenzylamin, N-Alkyl-N-1,1-Dimethylmethylphenylamin, Addukte von Benzylamin an Verbindungen mit aktivierten Doppelbindungen wie Malonsäureestern, N,N-Dimethylaminopropylbenzylamin und andere tertiäre Aminogruppen enthaltende gegebenenfalls substituierte Benzylamine und/oder Dibenzylamin oder beliebige Gemische dieser Blockierungsmittel. Falls überhaupt mitverwendet beträgt der Anteil dieser weiteren von CH-aziden cyclischen Ketonen verschiedenen Blockierungsmittel der Komponente C) bis zu 80 Gew.-%, bevorzugt bis zu 40 Gew.%, insbesondere bis zu 20 Gew.-% von der gesamten Komponente D).

Bevorzugt werden ausschließlich CH-azide cyclische Ketone der Formel (3) als Komponente D), insbesondere Cyclopentanon-2-carboxyethylester eingesetzt.

Als Katalysatoren E) für die Blockierung können Alkali- und Erdalkalimetallbasen, wie z.B. gepulvertes Natriumcarbonat (Soda), Trinatriumphosphat oder Aminbasen wie DABCO (1,4-Diazabicyclo[2.2.2]octan) eingesetzt werden. Ebenfalls sind die Carbonate der Metalle der zweiten Nebengruppe sowie Zinksalzen geeignet. Bevorzugt sind Natriumcarbonat, Kaliumcarbonat oder Zink-2-ethylhexanoat.

Der Gehalt freier NCO-Gruppen in den erfindungsgemäßen Polyisocyanat-Prepolymeren ist bevorzugt < 1 Gew.-%, besonders bevorzugt < 0,1 Gew.-%, ganz besonders bevorzugt < 0,01 Gew.%.

Beim erfindungsgemäßen Verfahren wird die Komponente B) mit überschüssigen Mengen der Polyisocyanatkomponente A) gegebenenfalls in Anwesenheit eines Katalysators C) umgesetzt. Anschließend wird gegebenenfalls unreagiertes Polyisocyanat destillativ, z.B. durch Dünnschichtdestillation, wieder entfernt. Bevorzugt liegt das Molverhältnis der OH-Gruppen der Polyetherpolyolkomponente zu den NCO-Gruppen des Di- oder Polyisocyanats zwischen 1:1,5 und 1:20, besonders bevorzugt zwischen 1:1,8 und 1:5 und ganz besonders bevorzugt zwischen 1:1,95 und 1:2,05.

Die Umsetzung von B) mit A) erfolgt allgemein bei Temperaturen von 0 bis 250°C, bevorzugt von 20 bis 140°C, besonders bevorzugt von 40 bis 100°C, gegebenenfalls unter der Verwendung einer Katalysatorkomponente C).

Zur Herstellung der erfindungsgemäßen Produkte, werden die aus A) und B), gegebenenfalls unter Verwendung von C), erhaltenen Isocyanatgruppen-haltigen Polyurethan-Prepolymere schließlich noch mit dem Blockierungsmittel D) bei Temperaturen von 0 bis 250°C, bevorzugt 20 bis 140°C, besonders bevorzugt von 40 bis 100°C, umgesetzt, gegebenenfalls unter der Verwendung geeigneter Katalysatoren E).

Das Blockierungsmittel ist in der Menge einzusetzen, dass die eingesetzten Äquivalente der zur Isocyanatblockierung geeigneten Gruppen des Blockierungsmittels mindestens 30 Mol.-%, bevorzugt 50 Mol.-%, besonders bevorzugt mehr als 95 Mol.-%, der Menge der zu blockierenden Isocyanatgruppen entsprechen. Ein geringer Überschuss an Blockierungsmittel kann zweckmäßig sein, um eine vollständige Reaktion aller Isocyanatgruppen zu gewährleisten. In der Regel beträgt der Überschuss nicht mehr als 20 Mol.-%, bevorzugt nicht mehr als 15 Mol.-% und besonders bevorzugt nicht mehr als 10 Mol.-%, bezogen auf die zu blockierenden Isocyanatgruppen. Ganz besonders bevorzugt liegt die Menge der zu NCO-Blockierung geeigneten Gruppen des Blockierungsmittels daher bei 95 Mol.-% bis 110 Mol.-%, bezogen auf die Menge der zu blockierenden Isocyanatgruppen des Polyurethan-Prepolyniers.

In dem erfindungsgemäßen Verfahren können, bezogen auf die gesamte Reaktionsmischung, 0,001 bis 10 Gew.-%, bevorzugt 0,005 bis 5 Gew.-%, besonders bevorzugt 0,005 bis 0,1 Gew.-% Katalysator zugesetzt werden.

Im Allgemeinen können zu jedem Zeitpunkt E) der Herstellung der erfindungsgemäßen Polyisocyanate ein oder mehrere unter den Verfahrensbedingungen inerte organische Lösemittel mitverwendet werden. Bevorzugt wird die Herstellung der erfindungsgemäßen Produkte ohne zusätzliche Lösemittel durchgeführt.

In einer Ausführungsform des erfindungsgemäßen Verfahrens wird in einem geeigneten Reaktionsgefäß die Komponente B) vorgelegt und gegebenenfalls unter Rühren auf 40 bis 100°C erwärmt. Nach Erreichen der gewünschten Temperatur wird dann unter Rühren die Polyisocyanatkomponente A) zugegeben und solange gerührt, bis der theoretische NCO-Gehalt des nach der gewählten Stöchiometrie zu erwartenden Polyurethan-Prepolymers erreicht oder geringfügig unterschritten ist. Zur Beschleunigung der anschließenden Blockierungsreaktion wird dann ein geeigneter Katalysator E), wie z.B. Zink(II)2-ethylhexanoat zugegeben, wobei die Temperatur der Reaktionsmischung vor oder nach der Zugabe des Katalysators gegebenenfalls auf einen Wert zwischen 50 und 100°C eingestellt wird. Nach dem Erreichen der gewünschten Temperatur wird nun das Blockierungsmittel D) zugegeben und die Reaktionsmischung solange erwärmt, bis der Gehalt an freien Isocyanatgruppen kleiner als 0,5 Gew.-%, bevorzugt kleiner als 0,2 Gew.-%, besonders bevorzugt kleiner als 0,1 Gew.-%, ist. Danach wird das Reaktionsgemisch abgekühlt und gegebenenfalls noch mit einem Reaktionsstopper, wie z.B. Benzoylchlorid versehen.

In einer weiteren Ausführungsform des erfindungsgemäßen Verfahrens zur Herstellung der Prepolymere wird die Polyisocyanatkomponente in A) einem geeigneten Reaktionsgefäß vorgelegt und gegebenenfalls unter Rühren auf 40 bis 100°C erwärmt. Nach Erreichen der gewünschten Temperatur wird unter Rühren dann Komponente B) zugegeben und solange gerührt, bis der theoretische NCO-Gehalt des nach der gewählten Stöchiometrie zu erwartenden Polyurethan-Prepolymers erreicht oder geringfügig unterschritten ist. Die weitere Umsetzung erfolgt dann wie bereits beschrieben.

Ein weiterer Gegenstand der Erfindung sind Reaktivsysteme enthaltend
a) ein oder mehrere erfindungsgemäße Polyurethan-Prepolymere
b) ein oder mehrere organische Verbindungen mit mindestens 2 primären Aminogruppen,
c) gegebenenfalls ein oder mehrere Oxirangruppen-aufweisende Verbindungen einer durchschnittlichen Oxiranfunktionalität > 1, sowie
d) gegebenenfalls Produkte aus Reaktionen der Komponenten a) bis d) untereinander,
sowie ein Verfahren zu deren Herstellung.

Bei den Aminen der Komponente b) handelt es sich um Polyamine, die mindestens zwei primäre Aminogruppen pro Molekül und gegebenenfalls noch sekundäre Aminogruppen aufweisen und vorzugsweise ein mittleres Molekulargewicht von 60 bis 500 besitzen. Geeignet sind beispielsweise Ethylendiamin, 1,2- und 1,3-Diaminopropan, 1,4-Diaminobutan, 2,2,4-und/oder 2,4,4-Trimethylhexamethylendiamin, die isomeren Xylolendiamine, 1,4-Diaminocyclohexan, 4,4'-Diaminodicyclohexylmethan, 1,3-Diaminocyclopentan, 4,4'-Diaminodicyclohexylsulfon, 4,4'-Diaminodicyclohexylpropan-1,3, 4,4'-Diaminodicyclohexylpropan-2,2, 3,3'-Dimethyl-4,4'-diaminodicyclohexylmethan, 3-Aminomethyl-3,3,5-trimethylcyclohexylamin (Isophorondiamin), 3(4)-Aminomethyl-1-methylcycloliexylamin, technisches Bisaminomethyltricyclodecan, Octahydro-4.7-methanoinden-1.5-dimethanamin oder auch solche Polyamine, die neben mindestens zwei primären Aminogruppen noch sekundäre Aminogruppen aufweisen wie beispielsweise Diethylentriamin oder Triethylentetramin.

Besonders bevorzugt sind Polyamine, insbesondere Diamine des genannten. Molekulargewichtsbereichs, die einen oder mehrere cycloaliphatische Ringe aufweisen. Hierzu gehören beispielsweise 1,4-Diaminocyclohexan, 4,4'-Diaminodicyclohexylmethan, 1,3-Diaminocyclopentan, 4,4'-Diaminodicyclohexylsulfon, 4,4'-Diaminodicyclohexylpropan-1,3, 4,4'-Diaminodicyclohexylpropan-2,2, 3,3'-Dimethyl-4,4'-diaminodicyclohexylmethan, 3-Aminomethyl-3,3,5-trimethylcyclohexylamin (Isophorondiamin), 3- und 4-Aminomethyl-1-methylcyclohexylamin oder technisches Bisaminomethyltricyclodecan.

Ebenfalls als Bestandteil der Aminkomponente einsetzbar sind Addukte, die durch Umsetzung eines Überschusses der genannten Polyamine mit Epoxidharzen der nachstehend genannten Art hergestellt werden.

Weiterhin in Komponente b) einsetzbar sind Polyetheramine, die durch Umsetzung von Polyetherpolyolen mit Ammoniak hergestellt werden und beispielsweise von Huntsman unter dem Handelsnamen Jeffamin^{®} vertrieben werden.

Des weiteren sind auch Polyamidharze als Bestandteil von Komponente b) geeignet. Derartige Polyamidharze, zu denen die Polyaminoamide und die Polyaminoimidazoline gehören, werden u.a. von Henkel KGaA unter dem Handelsnamen "Versamid^{®} " vertrieben.

Selbstverständlich ist es auch möglich Gemische der genannte Polyamine als Aminkomponente b) einzusetzen.

Verbindungen der Epoxidkomponente c) sind Epoxidharze, die im Durchschnitt mehr als eine Epoxidgruppe pro Molekül enthalten. Beispiele für geeignete Epoxidharze sind Glycidylether von mehrwertigen Alkoholen wie z.B. Butandiol, Hexandiol, Glycerin, hydriertem Diphenylolpropan oder mehrwertigen Phenolen wie z.B. Resorcin, Diphenylolpropan-2,2 (Bisphenol A) Diphenylolmethan (Bisphenol F) oder Phenol-Aldehyd-Kondensaten. Es können auch Glycidylester mehrwertiger Carbonsäuren; wie Hexahydrophtalsäure oder dimerisierte Fettsäure verwendet werden.

Besonders bevorzugt ist der Einsatz von flüssigen Epoxidharzen auf Basis von Epichlorhydrin und Diphenylolpropan-2,2 (Bisphenol A) oder Diphenylolmethan (Bisphenol F) bzw. deren Mischungen. Gewünschtenfalls kann mit monofunktionellen Epoxidverbindungen die Viskosität der Mischungen gesenkt werden und dadurch die Verarbeitung verbessert werden. Beispiele hierfür sind aliphatische und aromatische Glycidylether wie Butylglycidylether, Phenylglycidylether oder Glycidylester wie Versaticsäureglycidylester oder Epoxide wie Styroloxid oder 1,2-Epoxidodecan.

In den erfindungsgemäßen lösemittelfreien, raumtemperaturhärtenden Reaktivsystemen liegen im Allgemeinen pro Epoxidgruppe der Komponente c) 0,4 bis 0,9, vorzugsweise 0,5 bis 0,8 primäre Aminogruppen der Komponente b) und 0,02 bis 0,6, vorzugsweise 0,03 bis 0,5 blockierte Isocyanatgruppen der Komponente a) vor.

Zur Herstellung von gebrauchsfertigen Mischungen können den erfindungsgemäßen Reaktivsystemen die üblichen Hilfs- und Zusatzmittel wie beispielsweise Füllstoffe, Lösungsmittel, Verlaufshilfsmittel, Pigmente, Lösungsmittel, Reaktionsbeschleuniger oder Viskositätsregulatoren einverleibt werden. Beispielhaft genannt seien Reaktionsbeschleuniger wie Salicylsäure, Bis-(dimethylamino-methyl)-phenol oder Tris-(dimethylaminomethyl)-phenol, Füllstoffe wie Sande, Gesteinsmehl, Kieselsäure, Asbestmehl, Kaolin, Talkum, Metallpulver, Teer, Teerpech, Asphalte, Korkschrote, Polyamide, Weichmacher wie beispielsweise Phthalsäureester oder andere Viskositätsregulatoren wie beispielsweise Benzylalkohol.

Selbstverständlich kann der gebrauchsfertigen Mischung gegebenenfalls bis zu 20 Gew.-%, vorzugsweise bis zu 10 Gew.-%, besonders bevorzugt bis zu 5 Gew.-% eines Lösemittels bzw. Lacklösemittels der zuvor bereits beschriebenen Art für applikationstechnische Zwecke zugefügt werden. Sollte an dieser Stelle Lösemittel eingesetzt werden, kann auch bei einem eventuellen Einsatz von Lösemitteln während der Synthese der erfindungsgemäßen Polyurethan-Prepolymere auf das Entfernen des Lösemittels verzichtet werden.

Ganz besonders bevorzugt im Sinne dieser Erfindung sind allerdings lösemittelfreie gebrauchsfertige Reaktivsysteme.

Die Komponente a) wird beim erfindungsgemäßen Verfahren zur Herstellung der Reaktivsysteme in beliebiger Reihenfolge mit der Komponente b) vermischt, bevorzugt unter Rühren. Danach können, ebenfalls in beliebiger Reihenfolge und wiederum gegebenenfalls unter Rühren, noch die Komponenten c) und d) zugegeben werden.

Die Herstellung der erfindungsgemäßen Reaktivsysteme aus a) und b) und gegebenenfalls c) und/oder d) erfolgt bevorzugt bei Temperaturen von -20°C bis 50°C, besonders bevorzugt bei 0°C bis 40°C.

Die erfindungsgemäßen Polyisocyanate wie auch die Reaktivsysteme eignen sich zur Herstellung von Beschichtungen, Klebstoffen, Dichtungsmassen, Vergussmassen oder Formteilen in allen Anwendungsgebieten, wo gute Haftung, Chemikalienfestigkeit, sowie hohe Schlag- und Stoßfestigkeit, verbunden mit guter Flexibilität und Elastizität gefordert werden. Besonders gut geeignet sind die erfindungsgemäßen Systeme als Korrosionsschutzbeschichtungen. Insbesondere bei Belastung mit aggressiven Medien, wie beispielsweise bei der Ballasttank-Beschichtung zeichnen sich die Systeme durch eine gute Nasshaftung und eine gute Haftung unter Kothodenschutzbedingungen aus.

Die erfindungsgemäßen Reaktivsysteme können auf den unterschiedlichsten Untergründen eingesetzt werden. Als Beispiele seien genannt mineralische Untergründe, z.B. aus Beton und/oder Stein, metallische Untergründe, z.B. aus Eisen, Stahl, Kupfer, Messing, Bronze, Aluminium oder Titan sowie aus Legierungen der genannten Metalle, und Kunststoffe, z.B. in Form bereits bestehender Beschichtungen auf beispielsweise den genannten metallischen oder mineralischen Untergründen.

Die erfindungsgemäßen Reaktivsysteme können beispielsweise durch Gießen, Streichen, Tauchen, Spritzen, Fluten, Rakeln oder Walzen auf die zu beschichtende Oberfläche applizierte werden. Je nach Anwendungsgebiet können somit Schichtdicken von 10 µm (z.B. für dünne Korrosionsschutzbeschichtungen) bis zu mehreren Zentimetern (z.B. für rissüberbrückende Vergussmassen) erzielt werden.

Je nach gewählter Zusammensetzung der erfindungsgemäßen Reaktivsysteme, härten diese bei Umgebungsbedingungen, d.h. bei Temperaturen von vorzugsweise -30°C bis 50°C und einer relative Feuchte von vorzugsweise 10 % bis 90 % innerhalb von wenigen Minuten bis zu einigen Tagen. Durch erhöhte Temperaturen, d.h. oberhalb der genannten 50°C, kann die Aushärtung zusätzlich forciert werden, was in der Praxis ebenfalls gewünscht sein kann.

### Beispiele

### Vorbemerkung:

Alle Prozentangaben sind, soweit nicht anders vermerkt, als Gewichtsprozent (Gew.-%) zu verstehen.

Die in den Beispielen zur Herstellung der erfindungsgemäßen blockierten Polyurethan-Prepolymere eingesetzten Polyetherpolyole sind beispielsweise von der Fa. Bayer AG, Leverkusen, Deutschland, erhältlich, und sind durch folgende Kennzahlen charakterisiert:

**Tabelle 2:**

| | Acclaim^{®} 1000 | Acclaim^{®} 2200 | Acclaim^{®} 3201 | Acclaim^{®} 4200 |
|---|---|---|---|---|
| **Physikalische Daten** | | | | |
| Molekulargewicht | 1000 | 2000 | 3000 | 4000 |
| OH-Funktionalität | 2 | 2 | 2 | 2 |
| Viskosität (25°C) | 70 | 335 | 620 | 980 |

| **Chemische Daten** | | | | |
|---|---|---|---|---|
| OH-Zahl | 112 | 56 | 37 | 28 |
| (mg-KOH/g) | | | | |
| Gehalt ungesättigter Endgruppen (meq/g) | ≤ 0,0070 | ≤ 0,0070 | ≤ 0,0070 | ≤ 0,0070 |
| Säurezahl (mg KOH/g) | 0,02 | 0,02 | 0,018 | 0,018 |

D.E.R 358 ist ein flüssiges Epoxidharz auf Basis Bisphenol A und Bisphenol F mit einem Epoxid-Äquivalent von 170-180 und einem entsprechenden Epoxid-Gehalt von 23,9-25,3 % (beide Werte nach ASTM D-1652), erhältlich von der Fa. Dow Plastics, Midland, USA. Perenol^{®} E 8 ist ein Additiv zur Entlüftung und Entschäumung, erhältlich von Cognis, GmbH & Co KG, Düsseldorf, DE, und Laromin^{®} C 260, Bis(4-Amino-3-methylcyclohexyl)methan), ist erhältlich von BASF AG, Ludwigshafen, DE

### Beispiel 1

In einem 2 Liter Vierhalskolben mit Rückflußkühler wurden in einer Stickstoffatmosphäre 852,58 g (0,43 val) Polyether Acclaim^{®} 4200 (Bayer AG, OH-Zahl 28 [mg KOH/g]) vorgelegt und auf 60°C erhitzt. Danach wurden bei 60°C über einen Dosiertrichter 74,17g (0,85 val) 2,4-Toluylendiisocyanat (Bayer AG, Leverkusen) schnell zulaufen lassen. Es wurde so lange gerührt, bis ein NCO-Gehalt von 1,93 % erreicht war. Anschließend wurde zu der Mischung 1 g Zink-2-ethylhexanoat hinzugefügt, gefolgt von 73,25 g (0,47 val) Cyclopentanon-2-carboxyethylester. Bei einer Temperatur von 50°C - wurde dann gerührt, bis der NCO-Gehalt kleiner als 0,1 % war (ca. 4 Stunden). Das erhaltene blockierte Isocyanatprepolymer ergab folgende Kenndaten:

| | |
|---|---|
| blockierter NCO-Gehalt: | 1,79% |
| Viskosität (23°C): | 19 000 mPas |

### Beispiel 2

a) In einem 2 Liter Vierhalskolben mit Rückflußkühler wurden in einer Stickstoffatmosphäre 743,04 g (0,743 val) Polyether Acclaim^{®} 2200 (Bayer AG, OH-Zahl 56 [mg KOH/g]) vorgelegt und auf 60°C erhitzt. Danach wurden bei 60°C über einen Dosiertrichter 129,29 g (1,5 val) 2,4-Toluylendiisocyanat (Bayer AG, Leverkusen) schnell zulaufen gelassen. Es wurde so lange gerührt, bis ein NCO-Gehalt von 3,58% erreicht war. Anschließend wurde zu der Mischung 1 g Zink-2-ethylhexanoat hinzugefügt, gefolgt von 127,67 g (0,81 val) Cyclopentanon-2-carboxyethylester. Bei einer Temperatur von 50°C wurde dann solange gerührt, bis der NCO-Gehalt kleiner als 0,2 % war (ca. 4 Stunden). Das erhaltene blockierte Isocyanatprepolymer ergab folgende Kenndaten:

| | |
|---|---|
| blockierter NCO-Gehalt: | 3,12 % |
| Viskosität (23°C): | 23 700 mPas |

b) 20 g des Prepolymers aus a) wurden mit 6,82 g Octahydro-4.7-methanoinden-1.5-dimethanamin, 20 g D.E.R 358, 0,2 g 2,3-Dimethyl-3,4,5,6-tetrahydropyrimidin, 0,4 g Ölsäure, 0,2 g Perenol^{®} E 8 und 0,2 g Benzylalkohol innig verrührt. Die Mischung wurde in einer Schichtdicke von 3 mm ausgegossen. Nach einigen Stunden wurde ein transparenter, hochelastischer Kunststoff mit folgenden mechanischen Kennwerten erhalten:

| | |
|---|---|
| Bruchspannung: | 20,1 MPa |
| Bruchdehnung: | 55,9 % Längenausdehnung |
| Weiterreißwiderstand: | 3 8,9 N/mm |

### Beispiel 3

a) In einem 2 Liter Vierhalskolben mit Rückflußkühler wurden in einer Stickstoffatmosphäre 591,14 g (1,18 val) Polyether Acclaim^{®} 1000 (Bayer AG, OH-Zahl 112 (mg KOH/g) vorgelegt und auf 60°C erhitzt. Danach wurden bei 60°C über einen Dosiertrichter 205,72 g (2,36 val) 2,4-Toluylendiisocyanat (Bayer AG, Leverkusen) schnell zulaufen gelassen. Nun wurde solange gerührt, bis ein NCO-Gehalt von 6,23 % erreicht war. Anschließend wurde zu der Mischung 1 g Zink-2-ethylhexanoat hinzugefügt, gefolgt von 203,14 g (1,3 val) Cyclopentanon-2-carboxyethylester. Bei einer Temperatur von 50°C wurde dann noch solange gerührt, bis der NCO-Gehalt kleiner als 0,2 % war (ca. 4 Stunden). Das erhaltene blockierte Isocyanatprepolymer ergab folgende Kenndaten:

| | |
|---|---|
| blockierter NCO-Gehalt: | 4,97 % |
| Viskosität (23°C): | 115 000 mPas |

b) 20 g des Prepolymers aus a) wurden mit 7,33 g Octahydro-4.7-methanoinden-1.5-dimethanamin, 20 g D.E.R 358, 0,2 g 2,3-Dimethyl-3,4,5,6-tetrahydropyrimidin, 0,4 g Ölsäure, 0,2 g Perenol^{®} E 8 und 0,2 g Benzylalkohol innig verrührt. Die Mischung wurde in einer Schichtdicke von 3 mm ausgegossen. Nach 24 Stunden wurde ein transparenter, hochelastischer Kunststoff mit einer Shore-A- bzw. Shore-D-Härte von 92 bzw. 60 erhalten.

### Beispiel 4

a) In einem 2 Liter Vierhalskolben mit Rückflußkühler wurden in einer-Stickstoffatmosphäre - 812,65 g (0,54 val) Polyether Acclaim^{®} 3201 (Bayer AG, OH-Zahl 37 [mg KOH/g]) vorgelegt und auf 60°C erhitzt. Danach wurden bei 60°C über einen Dosiertrichter 94,27 g (1,08 val) 2,4-Toluylendiisocyanat (Bayer AG, Leverkusen) schnell zulaufen gelassen. Nun wurde so lange gerührt, bis ein NCO-Gehalt von 2,51 % erreicht war. Anschließend wurde zu der Mischung 1 g Zink-2-ethylhexanoat hinzugefügt, gefolgt von 93,09g (0,6 val) Cyclopentanon-2-carboxyethylester. Dann wurde bei einer Temperatur von 50°C solange gerührt, bis der NCO-Gehalt kleiner als 0,2 % war (ca. 4 Stunden). Das erhaltene blockierte Isocyanatprepolymer ergab folgende Kenndaten:

| | |
|---|---|
| blockierter NCO-Gehalt: | 2,28 % |
| Viskosität (23°C): | 15 200 mPas |

b) 20 g des Prepolymers aus a) wurden mit 6,70 g Octahydro-4.7-methanoinden-1.5-dimethanamin, 20 g D.E.R 358, 0,2 g 2,3-Dimethyl-3,4,5,6-tetrahydropyrimidin, 0,4 g Ölsäure, 0,2 g Perenol^{®} E 8 und 0,2 g Benzylalkohol innig verrührt. Die Mischung wurde in einer Schichtdicke von 3 mm ausgegossen. Nach einigen Stunden wurde ein transparenter, hochelastischer Kunststoff mit folgenden mechanischen Kennwerten erhalten:

| | |
|---|---|
| Bruchspannung: | 19,9 MPa |
| Bruchdehnung: | 56,9 % Längenausdehnung |
| Weiterreißwiderstand: | 29,6 N/mm |

### Beispiel 5

a) In einem 2 Liter Vierhalskolben mit Rückflusskühler wurden in einer Stickstoffatmosphäre 786,64 g (0,62 val) eines Polyetherpolyols der OH-Zahl 42 (mg KOH/g), hergestellt durch basisch katalysierte, gleichzeitige Ethoxylierung und Propoxylierung (EO/PO-Verhältnis = 2:8) eines 2:1-Gemisches von Propylenglykol und Glycerin, vorgelegt und auf 60°C erhitzt. Danach wurden, bei 60°C über einen Dosiertrichter 107,35 g (1,23 val) 2,4-Toluylendiisocyanat (Bayer AG, Leverkusen) schnell zulaufen gelassen. Nun wurde so lange gerührt, bis ein NCO-Gehalt von 2,90 % erreicht war. Anschließend wurde zu der Mischung 1 g Zink-2-ethylhexanoat hinzugefügt, gefolgt von 106,01 g (0,68 val) Cyclopentanon-2-carboxyethylester. Nun wurde bei einer Temperatur von 50°C solange gerührt, bis der NCO-Gehalt kleiner als 0,2 % war (ca. 4 Stunden). Das erhaltene blockierte Isocyanatprepolymer ergab folgende Kenndaten:

| | |
|---|---|
| blockierter NCO-Gehalt: | 2,59 % |
| Viskosität (23°C): | 29 900 mPas |

b) 20 g des Prepolymers aus a) wurden mit 6,75 g Octahydro-4.7-methanoinden-1.5-dimethanamin, 20 g D.E.R 358, 0,2 g 2,3-Dimethyl-3,4,5,6-tetrahydropyrimidin,0,4 g Ölsäure, 0,2 g Perenol^{®} E 8 und 0,2 g Benzylalkohol innig verrührt. Die Mischung wurde in einer Schichtdicke von 3 mm ausgegossen. Nach einigen Stunden wurde ein transparenter, hochelastischer Kunststoff mit folgenden mechanischen Kennwerten erhalten:

| | |
|---|---|
| Bruchspannung: | 17,8 MPa |
| Bruchdehnung: | 41,2 % Längenausdehnung |
| Weiterreißwiderstand: | 37,7 N/mm |

### Beispiel 6

a) In einem 2 Liter Vierhalskolben mit Rückflußkühler wurden in einer Stickstoffatmosphäre 845,6 g (0,45 val) eines Gemisches linearer Polyetherpolyole (OH-Zahl 28 [mg KOH/g]), bestehend aus 55 % eines linearen Polyetherpolyols erhalten durch Ethoxylierung und Propoxylierung (EO/PO-Verhältnis = 1:3) von Propylenglykol und 45 % eines linearen Polyetherpolyols erhalten durch Ethoxylierung und Propoxylierung (EO/PO-Verhältnis = 1:6) von Propylenglykol, vorgelegt und auf 60°C erhitzt. Danach wurden bei 60°C über einen Dosiertrichter 77,68 g (0,9 val) 2,4-Toluylendiisocyanat (Bayer AG, Leverkusen) schnell zulaufen gelassen. Nun wurde so lange gerührt, bis ein NCO-Gehalt von 2,03 % erreicht war. Anschließend wurde zu der Mischung 1 g Zink-2-ethylhexanoat hinzugefügt, gefolgt von 76,71 g (0,49 val) Cyclopentanon-2-carboxyethylester. Dann wurde bei einer Temperatur von 50°C gerührt, bis der NCO-Gehalt kleiner als 0,2 % war (ca. 4 Stunden). Das erhaltene blockierte Isocyanatprepolymer ergab folgende Kenndaten:

| | |
|---|---|
| blockierter NCO-Gehalt: | 1,88 % |
| Viskosität (23°C): | 15 600 mPas |

b) 20 g des Prepolymers aus a) wurden mit 6,59 g Octahydro-4.7-methanoinden-1.5-dimethanamin, 20 g D.E.R 358, 0,2 g 2,3-Dimethyl-3,4,5,6-tetrahydropyrimidin, 0,4 g Ölsäure, 0,2 g Perenol^{®} E 8 und 0,2 g Benzylalkohol innig verrührt. Die Mischung wurde in einer Schichtdicke von 3 mm ausgegossen. Nach einigen Stunden wurde ein ganz schwach trüber, hochelastischer Kunststoff mit folgenden mechanischen Kennwerten erhalten:

| | |
|---|---|
| Bruchspannung: | 18,7 MPa |
| Bruchdehnung: | 60,5 % Längenausdehnung |
| Weiterreißwiderstand: | 26,4 N/mm |

### Beispiel 7

Je 10 g der nach Beispiel 1-6 hergestellten, blockierten Polyurethan-Prepolymere, wurden mit je 0,05 g Perenol^{®} E 8 und 0,05 g 2,3-Dimethyl-3,4,5,6-tetrahydropyrimidin unter Rühren vermischt. Danach wurden jeweils die in Tabelle 3 angegebenen Menge Laromin^{®} C 260 unter Rühren zugegeben und die Reaktivmischung dann 3 Tage bei Umgebungstemperatur stehengelassen. In allen Fällen, d.h. mit allen beschriebenen Mengen an Laromin^{®} C. 260, wurden transparente, homogene, gut ausgehärtete und elastische Kunststoffe erhalten.

**Tabelle 3**

| | Laromin^{®} C 260 | | |
|---|---|---|---|
| blockiertes Polyurethan-Prepolymer aus Beispiel | Menge 1 | Menge 2 | Menge 3 |
| | [g] | [g] | [g] |
| 1 | 0,4 | 0,6 | 0,8 |
| 2 | 0,6 | 0,8 | 1,2 |
| 3 | 1,6 | 2,0 | 2,4 |
| 4 | 0,6 | 0,8 | 1,2 |
| 5 | 0,6 | 0,8 | 1,2 |
| 6 | 0,6 | 0,8 | 1,2 |

### Beispiel 8

In einem 500 ml Dreihalskolben mit Rückflusskühler wurden in einer - Stickstoffatmosphäre 283,5 g (0,04 val) Polyether Acclaim^{®} 8200 (Bayer AG, Leverkusen, OH-Zahl 15,8 (mg KOH/g)) vorgelegt und auf 60°C erhitzt. Danach wurden bei 60°C über einen Dosiertrichter 13,9 g (0,08 val) 2,4-Toluylendiisocyanat (Bayer AG, Leverkusen) schnell zulaufen gelassen. Nun wurde so lange gerührt, bis ein NCO-Gehalt von 1,13 % erreicht war. Anschließend wurden zu der Mischung 93 mg Zinktetramethylheptadionat hinzugefügt, gefolgt von 12,5 g (0,08 val) Cyclopentanon-2-carboxyethylester. Nun wurde bei einer Temperatur von 50°C gerührt, bis der NCO-Gehalt kleiner als 0,2 % war (ca. 22 Stunden).

| | |
|---|---|
| blockierter NCO-Gehalt: | 1,08% |
| Viskosität (23°C): | 31 000 mPas. |

### Beispiel 9

In einem 250 ml Dreihalskolben mit Rückflußkühler wurden in einer Stickstoffatmosphäre 112 g (0,01 val) Polyether Acclaim^{®} 12200 (Bayer AG, Leverkusen, OH-Zahl 10,0 (mg KOH/g)) vorgelegt und auf 60°C erhitzt. Danach wurden bei 60°C über einen Dosiertrichter 3,5 g (0,02 val) 2,4-Toluylendiisocyanat (Bayer AG, Leverkusen) schnell zulaufen gelassen. Nun wurde so lange gerührt, bis ein NCO-Gehalt von 0,73 % erreicht war. Anschließend wurden zu der Mischung 59 mg Zinkacetylacetonat hinzugefügt, gefolgt von 3,1 g (0,01 val) Cyclopentanon-2-carboxyethylester. Dann wurde bei einer Temperatur von 50°C solange gerührt, bis der NCO-Gehalt kleiner als 0,2 % war (ca. 22 Stunden).

| | |
|---|---|
| blockierter NCO-Gehalt: | 0,71 % |
| Viskosität (23°C): | 103 000 mPas |

### Beispiel 10

In einem 250 mL Dreihalskolben mit Rückflusskühler wurden in einer Stickstoffatmosphäre 100 g (0,1 val) Polyether Acclaim^{®} 2200 (Bayer AG, Leverkusen, OH-Zahl 55,9 (mg KOH/g)) vorgelegt und auf 60°C erhitzt. Danach wurden bei 60°C über einen Dosiertrichter 17,4 g (0,05 val) 2,4-Toluylendiisocyanat (Bayer AG, Leverkusen) schnell zulaufen gelassen. Nun wurde so lange gerührt, bis ein NCO-Gehalt von 3,58 % erreicht war. Anschließend wurde zu der Mischung 70 mg Zink-2-ethylhexanoat hinzugefügt, gefolgt von 18,7 g (0,12 val) Cyclohexanon-2-carboxyethylester. Dann wurde bei einer Temperatur von 50°C solange gerührt, bis der NCO-Gehalt kleiner als 0,2 % war (ca. 16 Stunden).

| | |
|---|---|
| blockierter NCO-Gehalt: | 3,13 % |
| Viskosität (23°C): | 17 700 mPas. |

### Beispiel 11

In einem 2 L Dreihalskolben mit Rückflußkühler wurden in einer Stickstoffatmosphäre 989,4 g (0,25 val) Polyether Acclaim^{®} 4200 (Bayer AG, Leverkusen, OH-Zahl 28,3 (mg KOH/g)) vorgelegt und auf 60°C erhitzt. Danach wurden bei 60°C über einen Dosiertrichter 87 g (0,5 val) 2,4-Toluylendiisocyanat (Bayer AG, Leverkusen) schnell zulaufen gelassen. Nun wurde so lange gerührt, bis ein NCO-Gehalt von 1,95 % erreicht war. Von der entstandenen Menge Prepolymer wurden 215,4 g (0,1 val) abgenommen und in einem weiteren Kolben mit 18,7 g Cyclohexanon-2-carboxyethylester (0,11 val) umgesetzt, in dem zuvor 350 mg Zinkacetylacetonat aufgeschlämmt worden waren. Dann wurde bei einer Temperatur von 50°C solange gerührt, bis der NCO-Gehalt kleiner als 0,2 % war (ca. 30 Stunden).

| | |
|---|---|
| blockierter NCO-Gehalt: | 1,68 % |
| Viskosität (23°C): | 32 000 mPas. |

### Beispiel 12

In einem 250 mL Dreihalskolben mit Rückflußkühler wurden in einer Stickstoffatmosphäre zu 180 g (0,15 val) Desmodur^{®} E 14 (Isocyanat-funktionelles Polyurethan-Prepolymer der Fa. Bayer AG, Leverkusen, NCO-Gehalt 3,3 Gew.-%, Viskosität 6800 mPas, Äquivalentgewicht ca. 1270) sowie 0,206 g Zink 2-ethylhexanoat langsam 25,5 g (0,15 val) Cyclohexanon-2-carboxyethylester hinzugegeben. Als Lösungsmittel wurden 28,2 g Methoxypropylacetat und 59,9 g Xylol verwendet. Nach 20 Stunden wurde ein NCO-Gehalt von 0,8 % erreicht. Es wurden noch 14,4 g 2-Butanol hinzugegeben.

| | |
|---|---|
| blockierter NCO-Gehalt: | 2,89 %. |

### Beispiel 13

Je 10 g der nach Beispiel 8-12 hergestellten, blockierten Polyurethan-Prepolymere, wurden mit je 0,05 g Perenol^{®} E 8 und 0,05 g 2,3-Dimethyl-3,4,5,6-tetrahydropyrimidin unter Rühren vermischt. Danach wurden jeweils die in Tabelle 4 angegebenen Mengen Laromin^{®} C 260 unter Rühren zugegeben und die Reaktivmischung dann 3 Tage bei Umgebungstemperatur stehengelassen. In allen Fällen, d.h. mit allen beschriebenen Mengen an Laromin^{®} C 260, wurden transparente, homogene und elastische Kunststoffe erhalten.

**Tabelle 4**

| | Laromin^{®} C 260 | | |
|---|---|---|---|
| blockiertes Polyurethan-Prepolymer aus Beispiel | Menge 1 | Menge 2 | Menge 3 |
| | [g] | [g] | [g] |
| 8 | 0,4 | 0,6 | 0,8 |
| 9 | 0,4 | 0,6 | 0,8 |
| 10 | 0,4 | 0,6 | 0,8 |
| 11 | 0,4 | 0,6 | 0,8 |
| 12 | 0,4 | 0,6 | 0,8 |

## Patentansprüche

1. Polyurethan-Prepolymere, die
I) Alkylenoxid-Ether-Einheiten und
II) Struktureinheiten der Formel (1) 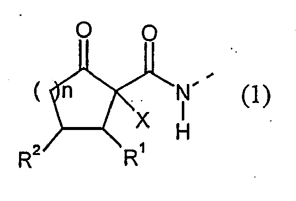
aufweisen, in welcher
X eine elektronenziehende Gruppe ist,
R¹, R² unabhängig voneinander ein Wasserstoffatom, ein gesättigter oder ungesättigter aliphatischer oder cycloaliphatischer, ein gegebenenfalls substituierter aromatischer oder araliphatischer Rest sind und je bis zu 12 Kohlenstoffatome und gegebenenfalls bis zu 3 Heteroatome der Elemente Sauerstoff, Schwefel, Stickstoff enthalten und gegebenenfalls durch Halogenatome substituiert sind und
n eine ganze Zahl von 0 bis 5 ist.

2. Polyurethan-Prepolymere nach Anspruch 1 **dadurch gekennzeichnet, dass** die elektronenziehende Gruppe X eine Ester-, Sulfoxid-, Sulfon-, Nitro-, Phosphonat-, Nitril-, Isonitril- oder Carbonylgruppe ist.

3. Verfahren zur Herstellung von Polyurethan-Prepolymeren nach Anspruch 1 oder 2, bei dem
A) ein oder mehrere Polyisocyanate mit
B) einem oder mehreren Polyetherpolyolen
C) gegebenenfalls in Anwesenheit eines oder mehrerer Katalysatoren umgesetzt werden und anschließend die freien NCO-Gruppen mit
D) einem Blockierungsmittel enthaltend mindestens ein CH-azides cyclisches Keton der allgemeinen Formel (3), 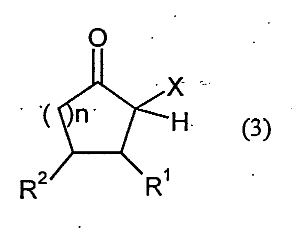 in welcher
X eine elektronenziehende Gruppe ist,
R¹, R² unabhängig voneinander ein Wasserstoffatom, ein gesättigter oder ungesättigter aliphatischer oder cycloaliphatischer, ein gegebenenfalls substituierter aromatischer oder araliphatischer Rest sind und je bis zu 12 Kohlenstoffatome und gegebenenfalls bis zu 3 Heteroatome der Elemente Sauerstoff, Schwefel, Stickstoff enthalten und gegebenenfalls durch Halogenatome substituiert sind und
n eine ganze Zahl von 0 bis 5 ist,
E) gegebenenfalls in Anwesenheit eines oder mehrerer Katalysatoren
umgesetzt werden.

4. Verfahren nach Anspruch 3, **dadurch gekennzeichnet, dass** die elektronenziehende Gruppe X des CH-aziden cyclischen Ketons eine Ester-, Sulfoxid-, Sulfon-, Nitro-, Phosphonat-, Nitril-, Isonitril- oder Carbonylgruppe ist.

5. Reaktivsystemen enthaltend
a) ein oder mehrere Polyurethan-Prepolymere nach Anspruch 1 oder 2
b) ein oder mehrere organische Verbindungen mit mindestens 2 primären Aminogruppen,
c) gegebenenfalls ein oder mehrere Oxirangruppen-aufweisende Verbindungen einer durchschnittlichen Oxiranfunktionalität > 1, sowie
d) gegebenenfalls Katalysatoren und/oder Additive
e) gegebenenfalls Produkte aus Reaktionen der Komponenten a) bis d) untereinander.

6. Verfahren zur Herstellung der Reaktivsysteme nach Anspruch 5 bei dem die Komponenten a) bis d) in beliebiger Reihenfolge miteinander vermischt werden.

7. Verwendung der Reaktivsysteme nach Anspruch 6 zur Herstellung von Klebstoffen, Dichtungsmassen, Formteilen und Beschichtungen.

8. Substrate beschichtet mit Beschichtungen nach Anspruch 7.

9. Formkörper erhältlich nach Anspruch 7.

## Claims

1. Polyurethane prepolymers which contain
I) alkylene oxide ether units and
II) structural units of formula (1): 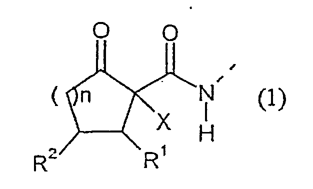
in which
X is an electron-withdrawing group,
R¹, R² independently of one another are a hydrogen atom, a saturated or unsaturated aliphatic or cycloaliphatic radical or an optionally substituted aromatic or araliphatic radical, which radicals in each case contain up to 12 carbon atoms and optionally up to 3 heteroatoms selected from the elements oxygen, sulfur and nitrogen, and are optionally substituted by halogen atoms, and
n is an integer from 0 to 5.

2. Polyurethane prepolymers according to Claim 1, **characterized in that** the electron-withdrawing group X is an ester, sulfoxide, sulfone, nitro, phosphonate, nitrile, isonitrile or carbonyl group.

3. Process for the preparation of polyurethane prepolymers according to Claim 1 or 2, wherein
A) one or more polyisocyanates are reacted with
B) one or more polyetherpolyols,
C) optionally in the presence of one or more catalysts, after which the free NCO groups are reacted with
D) a blocking agent containing at least one CH-acidic cyclic ketone of general formula (3): 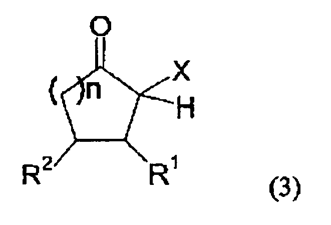 in which
X is an electron-withdrawing group,
R¹, R² independently of one another are a hydrogen atom, a saturated or unsaturated aliphatic or cycloaliphatic radical or an optionally substituted aromatic or araliphatic radical, which radicals in each case contain up to 12 carbon atoms and optionally up to 3 heteroatoms selected from the elements oxygen, sulfur and nitrogen, and are optionally substituted by halogen atoms, and
n is an integer from 0 to 5,
E) optionally in the presence of one or more catalysts.

4. Process according to Claim 3, **characterized in that** the electron-withdrawing group X of the CH-acidic cyclic ketone is an ester, sulfoxide, sulfone, nitro, phosphonate, nitrile, isonitrile or carbonyl group.

5. Reactive systems containing
a) one or more polyurethane prepolymers according to Claim 1 or 2,
b) one or more organic compounds with at least 2 primary amino groups,
c) optionally one or more compounds containing oxirane groups with a mean oxirane functionality of >1,
d) optionally catalysts and/or additives, and
e) optionally products resulting from reactions of components a) to d) with one another.

6. Process for the preparation of the reactive systems according to Claim 5 wherein components a) to d) are mixed together in any order.

7. Use of the reactive systems according to Claim 6 for the production of adhesives, sealing compounds, mouldings and coatings.

8. Substrates coated with coatings according to Claim 7.

9. Mouldings obtainable according to Claim 7.

## Revendications

1. Prépolymères de polyuréthanne, lesquels présentent
I) des unités éther-oxyde d'alkylène et
II) des unités de structure de la formule (1) 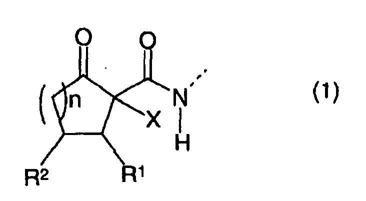
dans laquelle
X est un groupe attracteur d'électrons,
R¹, R² sont indépendamment l'un de l'autre un atome d'hydrogène, un reste aliphatique ou cycloaliphatique saturé ou insaturé, un reste aromatique ou araliphatique éventuellement substitué et contiennent chacun jusqu'à 12 atomes de carbone et éventuellement jusqu'à 3 hétéroatomes des éléments oxygène, soufre, azote, et sont éventuellement substitués par des atomes d'halogène et
n est un nombre entier de 0 à 5.

2. Prépolymères de polyuréthanne selon la revendication 1, **caractérisés en ce que** le groupe X attracteur d'électrons est un groupe ester, sulfoxyde, sulfone, nitro, phosphonate, nitrile, isonitrile ou carbonyle.

3. Procédé pour la préparation de prépolymères de polyuréthanne selon la revendication 1 ou 2, dans lequel on fait réagir
A) un ou plusieurs polyisocyanates avec
B) un ou plusieurs polyétherpolyols
C) éventuellement en présence d'un ou plusieurs catalyseurs et on fait ensuite réagir les groupes NCO libres avec
D) un agent bloquant contenant au moins une cétone cyclique CH-acide de la formule générale (3), 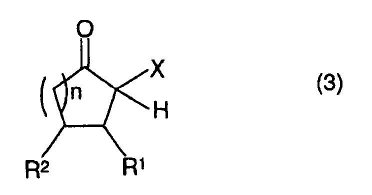 dans laquelle
X est un groupe attracteur d'électrons,
R¹, R² sont indépendamment l'un de l'autre un atome d'hydrogène, un reste aliphatique ou cycloaliphatique saturé ou insaturé, un reste aromatique ou araliphatique éventuellement substitué et contiennent chacun jusqu'à 12 atomes de carbone et éventuellement jusqu'à 3 hétéroatomes des éléments oxygène, soufre, azote et sont éventuellement substitués par des atomes d'halogène et
n est un nombre entier de 0 à 5,
E) éventuellement en présence d'un ou plusieurs catalyseurs.

4. Procédé selon la revendication 3, **caractérisé en ce que** le groupe X attracteur d'électrons de la cétone cyclique CH-acide est un groupe ester, sulfoxyde, sulfone, nitro, phosphonate, nitrile, isonitrile ou carbonyle.

5. Systèmes réactifs contenant
a) un ou plusieurs prépolymères de polyuréthanne selon la revendication 1 ou 2
b) un ou plusieurs composés organiques avec au moins deux groupes amino primaires,
c) éventuellement un ou plusieurs composés présentant des groupes oxirane d'une fonctionnalité oxirane moyenne > 1, ainsi que
d) éventuellement des catalyseurs et/ou des additifs
e) éventuellement des produits des réactions des constituants a) à d).

6. Procédé pour la préparation des systèmes réactifs selon la revendication 5, dans lequel on mélange ensemble les constituants a) à d) dans un ordre quelconque.

7. Utilisation des systèmes réactifs selon la revendication 6 pour la préparation de colles, de matériaux d'étanchéité, de pièces moulées et de revêtements.

8. Substrats revêtus de revêtements selon la revendication 7.

9. Corps moulés obtenus selon la revendication 7.
